# FASCICULE DE BREVET EUROPEEN

(11) **EP 0 952 889 B1**
(45) Date de publication et mention de la délivrance du brevet: **17.12.2003**
(21) Numéro de dépôt: 98902047.4
(22) Date de dépôt: 09.01.1998
(51) Int. Cl.: B01J 27/224, C04B 38/00

(54) **SUPPORT DE CATALYSEUR A BASE DE CARBURE DE SILICIUM A SURFACE SPECIFIQUE ELEVEE SOUS FORME DE GRANULE AYANT DES CARACTERISTIQUES MECANIQUES AMELIOREES**
KATALYSATORTRÄGER AUF BASIS VON SILIZIUMKARBID MIT HOHER SPEZIFISCHER OBERFLÄCHE IN GRANULATFORM MIT VERBESSERTEN MECHANISCHEN EIGENSCHAFTEN
CATALYST SUPPORT WITH BASE OF SILICON CARBIDE WITH HIGH SPECIFIC SURFACE AREA IN GRANULATED FORM HAVING IMPROVED MECHANICAL CHARACTERISTICS

(30) Priorité: 13.01.1997 FR 9700425
(43) Date de publication de la demande: 03.11.1999
(73) Titulaire: CENTRE NATIONAL DE LA RECHERCHE SCIENTIFIQUE, 75974 Paris (FR)
(72) Inventeur: BALUAIS, Gérard, F-38140 La Murette (FR); OLLIVIER, Benoist, F-38500 Voiron (FR)
(74) Mandataire: Pigasse, Daniel
(86) Numéro de dépôt international: FR9800030
(87) Numéro de publication internationale: WO98030328

(56) Documents cités:
- EP-A- 0 511 919
- EP-A- 0 543 752
- EP-A- 0 624 560
- DE-A- 3 516 587

## Description

### DOMAINE TECHNIQUE

L'invention concerne un support de catalyseur à base de carbure de silicium à surface spécifique élevée sous forme de particules ayant des caractéristiques mécaniques améliorées grâce à un taux de cristallinité amélioré.

### ETAT DE LA TECHNIQUE

Il est connu du brevet FR 2657603 l'obtention de supports de catalyseur, en particulier en SiC, à surface spécifique élevée (supérieure à 15 m2/g) provenant d'une première famille de pores de diamètre moyen compris entre 1 et 100 µm permettant au gaz d'avoir accès à une deuxième famille de pores de diamètre moyen inférieur à 0,1 µm responsable de la surface spécifique et de l'activité catalytique.

Ce support est obtenu par mélange d'une poudre de Si ou d'un de ses composés réductibles dans une résine organique polymérique ou polymérisable avec éventuellement des adjuvants, mise en forme du mélange, réticulation et polymérisation de la résine, obtention d'un squelette poreux de carbone et de Si ou de son composé par carbonisation en atmosphère non oxydante à une température située entre 500 et 1000°C, et enfin carburation du Si à une température comprise entre 1000 et 1400°C toujours sous atmosphère non oxydante.

Il est connu également du brevet FR 2684091 d'obtenir un carbure métallique, en particulier de Si, en faisant réagir, dans un four sous un courant de gaz inerte à pression atmosphérique, un mélange de carbone ayant une surface spécifique d'au moins 200 m2/g et d'un composé volatil Si à une température comprise entre 900 et 1400°C pour réduire et carburer ledit composé. Avec un charbon actif, dont la porosité comporte des macropores entre nodules de diamètre moyen de 2 à 5 µm, des mésopores entre particules de diamètre moyen de 0,003 à 0,005 µm et une microporosité des particules de diamètre moyen de 0,0005 et 0,015µm, on obtient un carbure dont la macroporosité a été conservée, la taille des mésopores a été multipliée approximativement par 3 et la microporosité a disparu.

Le brevet FR 2684092 décrit une mousse de SiC obtenu par un procédé du même type que le précédent, par réaction d'un composé volatil du Si sur une mousse de carbone activée. Cette mousse de carbone activée peut résulter d'une mousse de polyuréthanne renforcée par imprégnation à l'aide d'une résine et durcissement de la résine, la mousse renforcée étant ensuite carbonisée pour donner la mousse de carbone qui est alors activée.

La mousse de carbure obtenue a une surface spécifique d'au moins 20 m2/g grâce en particulier à des macropores comportant des arêtes dont les longueurs peuvent varier de 50 à 500 µm et principalement à des mésopores dont le diamètre, comme précédemment, a été multiplié par un facteur approximatif de 3 par rapport à celui des pores de la mousse de carbone activée qui sont compris entre 0,002 et 0,02 µm.
Sa masse spécifique est comprise entre 0,03 et 0,1 g/cm3.

Il est enfin connu du brevet FR 2705340 un procédé d'obtention de mousse de carbure de silicium comme support de catalyseur s'apparentant au procédé du premier brevet cité ci-dessus FR 2657603. U consiste à partir d'une mousse de polyuréthanne, à l'imprégner par une suspension de Si dans une résine organique oxygénée, à polymériser la résine, à carboniser simultanément la mousse et la résine entre 250 et 1000°C sous atmosphère inerte et à carburer le Si jusqu'à une température comprise entre 1300 et 1400°C toujours sous atmosphère inerte.

La mousse support de catalyseur a une surface spécifique supérieure à 10 m2/g, avec une porosité bimodale comprenant des macropores dont le diamètre moyen est compris entre 100 et 150 µm et des mésopores entre 0,0275 et 0,035 µm.

Par ailleurs, il est décrit une mousse pouvant être utilisée comme filtre de moteur diesel, qui n'a conservé que les macropores, entre 100 et 150 µm et dont la mésoporosité est très faible, après que la carburation ait été faite à une température finale plus élevée comprise entre 1300° et 1600°C.

EP-A-0 511 919 et EP-A-0 543 752 décrivent des procédés de préparation de carbures métalliques.

Les supports de catalyseurs décrits ci-dessus peuvent être utilisés sous forme de granulé en particulier dans des réactions catalytiques en chimie ou pétrochimie, par exemple hydrogénation, déshydrogénation, isomérisation, décyclisation des hydrocarbures avec de bons résultats.

Cependant au cours de leur utilisation industrielle ces supports particulaires sont soumis à des contraintes mécaniques importantes dues par exemple au fait qu'ils sont utilisés sous forme de lits ou qu'ils sont manipulés ou stockés à répétition.

Ainsi la demanderesse a recherché à améliorer les caractéristiques mécaniques de ces supports sous forme de granulés pour faire face aux contraintes évoquées ci-dessus sans nuire à leurs propriétés catalytiques.

### DESCRIPTION DE L'INVENTION

L'invention est un support catalytique sous forme granulée, à base de cristallites de SiCβ, de surface spécifique élevée supérieure à 5m2/g, et ayant des caractéristiques mécaniques améliorées, caractérisé en ce que sa porosité comprend essentiellement des pores de diamètre moyen compris entre 0,001 et 1 µm, de préférence 0,5 µm, et qu'il a une cristallinité définie par :
- une largeur à mi-hauteur des raies de diffraction X correspondant au plan [2 2 0] des cristallites de SiCβ comprise entre 0,15 et 0,60°, angle 2θ de la loi de Bragg,
- une hauteur h [1 0] du pic bidimensionnel correspondant aux directions [1 0], rapportée à l'intensité intégrée du pic du plan [2 2 0] comprise entre 0,15 et 0,40.

Ce type de mesures est connu et a été pratiqué d'après les méthodes décrites par :
(1) P.J.Schields : Testing a thermostatistical theory of stacking fault abundance and distribution in silicon carbide using XRPD, HRTEM and NMR
   PhD thesis, Arizona State University, 1994
(2) MMJ Treacy, JM Newsam and MW Deem : A general recursion method for calculating diffracted intensities from crystals containing planar faults. Proc Roy Soc London, A433, 499-520 (1991).

La largeur à mi-hauteur des raies [2 2 0] des cristaux cubiques de SiCβ est donnée en degrés 2θ correspondant généralement au rayonnement Kα du cuivre (CuKα); elle est représentative de la taille des domaines cohérents des cristallites du produit.

Les largeurs à mi-hauteur des pics de diffraction sont typiquement déterminées avec les conditions de mesure suivante: fentes d'entrée et de divergence de 1°, fentes de réception de 0,06°. Les hauteurs à mi largeur citées ci-dessus ne sont pas corrigées de l'élargissement instrumental.

Pour des valeurs de largeur à mi-hauteur inférieures à la limite de 0,15°, la taille des cristallites devient trop importante, la surface spécifique du support disparaît, et la tenue mécanique des granulés décroît fortement.
Une explication de cette perte de tenue mécanique pourrait être qu'il y a un manque de liens entre les particules de SiC provenant de ce que, au cours du traitement thermique qui sera vu plus loin, le squelette de carbone servant de lien n'a pas été transformé en SiC, mais au contraire aurait été transformé en partie en CO pour réagir avec les grains de Si dispersé dans ledit squelette.

Pour des valeurs supérieures à 0,6°, correspondant à une cristatlinité trop faible, la surface spécifique peut être élevée mais la tenue mécanique des granulés est également insuffisante. Dans ce cas l'explication serait que cette insuffisance de tenue mécanique proviendrait d'une taille insuffisante des cristallites de SiC.

La hauteur du pic bidimensionnel rapportée à l'intensité intégrée du pic du plan [2 2 0] notée [h (10)/I (220)] est représentative de la densité des défauts d'empilement dans la structure cubique du SiC.
Quand la hauteur de ce pic est trop faible, la surface spécifique disparaît, et quand elle est trop importante, on constate que la tenue mécanique devient insuffisante, probablement à cause d'un manque de cohérence de l'empilement des cristallites lié à la surface spécifique obtenue.

La surface spécifique des granulés est d'au moins 5m2 /g mais habituellement supérieure à 10 m2/g et pratiquement comprise entre 10 et 50 m2/.g.

La densité non tassée des granulés est typiquement comprise entre 0,5 et 0,9 et de préférence entre 0,6 et 0,8.

La taille des granulés peut varier dans une large mesure ; elle est généralement inférieure à 5 mm de diamètre pour que le support soit efficace, et supérieure à 0,4 mm pour fournir un bon accès du flux traité aux particules et minimiser les pertes de charge.

La tenue mécanique améliorée est mesurée par la résistance à l'écrasement et se situe généralement entre 1 et 20 MPa, et de préférence supérieure à 10 MPa, test dit « Bulk Crushing Strength ». Ce test, effectué selon la norme ASTM D 4179-88a, consiste à placer une masse déterminée d'échantillon dans une éprouvette métallique de dimensions normalisées. On soumet cet échantillon à un effort de compression croissant par palier, au moyen d'un piston actionné par une presse mécanique.
Les fines produites aux différentes pressions sont séparées par tamisage et pesées.

La résistance à l'écrasement correspond à la pression pour laquelle 0,5% de fines sont produites.
Cette valeur est obtenue par interpolation sur un graphique établi à partir des taux de fines obtenus aux diverses pressions.

Pour obtenir le support de catalyseur à base de SiC selon l'invention on peut opérer de la façon suivante, dérivée du procédé du brevet FR 2657603 cité plus haut.

On part d'une résine thermodurcissable à fort taux de carbone comportant de préférence de l'oxygène avec un pourcentage massique d'oxygène d'au moins 15%, par exemple du type furfurylique (taux d'oxygène d'au moins 25%), phénolique, carboxylique..., à laquelle on ajoute de la poudre de Si et avantageusement de la poudre de carbone activé ayant en général une surface spécifique supérieure à 10 m2/g ou mieux à 40 m2/g ; on peut également y ajouter des additifs du type réticulant (0,5 à 10% poids par rapport à la résine), porogène, plastifiant, lubrifiant, par exemple organique ou même l'eau, solvant polaire ou non polaire, le réticulant contribuant en particulier à l'obtention d'un bon rendement en carbone lors du traitement thermique.

La résine peut être remplacée par du brai.

La poudre de Si a une granulométrie moyenne typiquement inférieure à 500 µm, de préférence compris entre 0,1 et 100 µm.
Le Si peut être au moins en partie remplacé par SiO₂ par exemple des fumées de silice, qui sont le résidus de la fabrication du Si et qui sont constituées essentiellement de SiO₂ amorphe.

Le mélange est mis en forme, par exemple par extrusion, pour lui assurer une homogénéité et une densité suffisante.

On élimine par chauffage les éventuels adjuvants et réticule ou durcit la résine ou le brai jusqu'à 250°C avec une durée de traitement en général supérieure à 20 mn.

Il est important de soigner la réticulation ce qui permet d'améliorer le rendement en carbone par un étuvage suffisamment long.

Typiquement on peut porter la température de 120 °C à 200 °C sur une durée comprise entre 15 min et 1 h et maintenir un palier 200 ± 20 °C pendant une durée comprise entre 1 et 2 h.

On traite thermiquement en une seule étape sous atmosphère légèrement oxydante par rapport au Si, du type CO à une température comprise entre 1300 et 1450°C pour carboniser les matières organiques et obtenir le carbure, éventuellement après réduction de SiO₂, les réactions se déroulant toujours en phase solide ou gazeuse, et de préférence comprise entre 1300 et 1400 °C.

On peut optionnellement éliminer ensuite le carbone excédentaire par combustion en atmosphère oxydante à une température comprise entre 500 et 1000°C, habituellement vers 700°C.

Il est important que le profil thermique soit tel que la phase de carbonisation se déroule rapidement, c'est à dire que la vitesse de montée en température jusqu'à 1000 °C soit comprise entre 1 et 100 °C/min et de préférence entre 20 et 100 °C/min, de façon à augmenter le rendement en carbone et à obtenir un squelette carboné plus dense qui, après transformation en SiC, donnera une meilleure cristallinité permettant d'améliorer la tenue mécanique sans altérer la surface spécifique.
On opère avantageusement à pression atmosphérique.

Pour obtenir la cristallinité souhaitée, l'atmosphère légèrement oxydante par rapport à Si est réalisée en maintenant une pression partielle de CO comprise entre 1 et 500 mbar. Ce type d'atmosphère permet de transformer le squelette de carbone en SiC et non les grains de Si en SiC et maintenir une surface spécifique élevée tout en obtenant un bon rendement de réaction; ce dernier favorise l'apparition de caractéristiques mécaniques améliorées grâce au fort taux de carbonisation obtenu auparavant.

Les granulés de carbure de silicium peuvent être obtenus dans un four de traitement thermique discontinu ou à passage continu, l'atmosphère contenant le CO pouvant alors circuler à co-courant mais de préférence à contre-courant.

La durée du traitement thermique est avantageusement comprise entre 15 min et 3 h, de préférence entre 30 min et 1,5 h, en particulier quand le procédé est effectué dans un four à passage continu, le produit restant alors au moins 1 h à 1300 °C ou plus et cette durée étant d'autant plus courte que la température finale est plus élevée (tout en restant inférieure à 1450 °C de préférence 1400 °C, comme cela a été déjà vu).

Cette atmosphère est obtenue généralement grâce à l'oxygène contenu dans les matières de départ et sa valeur contrôlée à l'aide d'un courant de gaz inerte, par exemple du type argon.

Dans ces conditions, pour obtenir un granulé de SiC simultanément à surface spécifique élevée et à tenue mécanique améliorée, avec un taux de transformation du Si d'au moins 95%, il est préférable que la durée du traitement thermique soit d'au moins 20 min (en particulier à 1300°C) et d'au plus 3 h (en particulier à 1450°C).

On peut également jouer sur le type des matières organiques (par exemple leur teneur en O₂ et leur rendement en carbone qui doit être élevé comme cela a été déjà dit), les proportions du mélange, les conditions de procédé pour améliorer par exemple le rendement en carbone.

Le produit final ne comporte pas de Si résiduel (moins de 0,5% poids détectable par diffraction de rayons X).

### EXEMPLES

### Exemple 1

Cet exemple illustre l'obtention d'un granulé support de catalyseur selon l'invention.
On a mélangé :
500 g de résine furfurylique
1800 g de Si
860 g de noir de carbone de surface spécifique-BET 100 m2/g
25 g de Hexaméthylènetétramine (réticulant)

Ce mélange a été extrudé pour obtenir de petits boudins de 1 mm de diamètre, 3 mm de longueur qui ont été réticulés à 200°C.

Les particules obtenues ont été portées à 1400°C avec une vitesse de montée en température de 5°C/min sous courant d'argon à pression atmosphérique, dont le débit a été régulé pour maintenir une pression partielle de CO d'environ 10 mbar.
Après carburation complète du Si, le carbone excédentaire a été brûlé à 700°C en atmosphère oxydante.

Le support catalytique de SiC obtenu a une surface spécifique BET de 10 m2/g.

Le diagramme de diffraction X donne une largeur à mi-hauteur de la raie [2 2 0] de 0,36° et une hauteur normalisée h(10)/I(220) du pic bidimensionnel de 0,26.

La résistance à l'écrasement est de 14 MPa.

### Exemple 2

A titre comparatif il concerne un granulé de surface spécifique élevée, mais ayant des caractéristiques mécaniques insuffisantes.

On a mélangé :
500 g résine
1800 g Si
25 g HMT (hexaméthylènetétramine)
510 g noir de carbone

Il a été réticulé et traité thermiquement comme dans l'exemple 1, à l'exception de la pression partielle de CO qui a été maintenue à 600 mbar.

Le produit obtenu a une surface spécifique BET de 7,7 m2/g du même ordre que celle du support de SiC obtenu dans l'exemple 1.

Le diagramme de rayons X donne une largeur à mi-hauteur de la raie (2 2 0] de 0,13° et une hauteur normalisée h(10)/I(220) du pic bidimensionnel de 0,11.

Sa surface spécifique est acceptable (7,7 m2/g ) mais surtout sa résistance à l'écrasement est insuffisante : 0,3 MPa.

### Exemple 3

Cet exemple est également comparatif.
La composition de départ est la même que celle des exemples 1 et 2, mais le noir de carbone a été supprimé.

Les conditions opératoires sont celles de l'exemple 1, la pression partielle de CO ayant cependant été maintenue à une valeur de 550 mbar.

Le carbone obtenu a une surface spécifique BET de 4,3 m2/g et une résistance à l'écrasement de 0,1 MPa, valeurs qui sont insuffisantes.

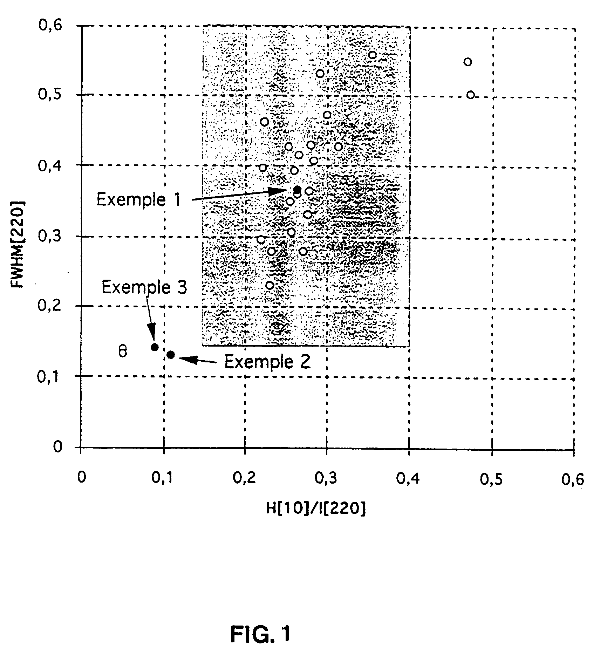

La figure 1 représente un ensemble de résultats situés à l'intérieur et en dehors du domaine de l'invention. En abscisse est donnée la hauteur du pic bidimentionnel h [1 0] rapportée à l'intensité intégrée du pic du plan [2 2 0] et en ordonnée figure la largeur à mi hauteur en degré 2θ (CuKα) de la raie correspondant au plan [2 2 0] (FWMH = Full Width at Half Maximum).

## Revendications

1. Support catalytique sous forme granulée, à base de cristallites de SiCβ, de surface spécifique élevée supérieure à 5 m2/g et ayant des caractéristiques mécaniques améliorées **caractérisé en ce que** sa porosité comprend essentiellement des pores compris entre 0,001 et 1 µm et qu'il a une cristallinité définie par :
- une largeur à mi-hauteur des raies de diffraction X correspondant au plan [2 2 0] des cristallites de SiCβ comprise entre 0,15 et 0,60°, angle 2θ de la loi de Bragg,
- une hauteur du pic bidimensionnel [1 0] correspondant aux directions [1 0], rapportée à l'intensité intégrée du pic du plan [2 2 0] comprise entre 0,15 et 0,40.

2. Support granulé selon la revendication 1 **caractérisé en ce que** sa surface spécifique est supérieure à 10m²/g.

3. Support granulé selon l'une quelconque des revendications 1 ou 2 **caractérisé en ce que** sa résistance à l'écrasement est supérieure à 1 MPa.

4. Support granulé selon l'une quelconque des revendications 1 à 3 **caractérisé en ce que** sa densité non tassée est comprise entre 0,5 et 0,9.

5. Procédé pour obtenir le support catalytique de carbure sous forme granulée de l'une quelconque des revendications 1 à 4 **caractérisé en ce qu'**il comprend les étapes suivantes :
- mélange d'une résine thermodurcissable ou d'un brai avec au moins une poudre de Si et/ou de SiO₂, et optionnellement d'additifs,
- mise en forme du mélange obtenu
- durcissement de la résine ou du brai
- traitement thermique sous atmosphère légèrement oxydante, à pression atmosphérique, à une température comprise entre 1300 et 1450°C pour carboniser la résine ou le brai puis optionnellement réduire SiO₂, et carburer le silicium, les réactions se déroulant toujours en phase solide ou gazeuse.

6. Procédé selon la revendication 5 **caractérisé en ce que** le mélange comprend l'un au moins des additifs suivants : carbone activé, réticulant, porogène, plastifiant, lubrifiant, solvant.

7. Procédé selon l'une quelconque des revendications 5 ou 6 **caractérisé en ce que** la poudre de Si et/ou de SiO₂ est de la fumée de silice.

8. Procédé selon l'une quelconque des revendications 5 à 7 **caractérisé en ce que** la pression partielle de CO durant le traitement thermique est comprise entre 1 et 500 mbar.

## Patentansprüche

1. Katalysatorträger in granulierter Form auf Basis von SiCβ-Kristalliten, mit hoher spezifischer Oberfläche größer als 5 m²/g und mit verbesserten mechanischen Eigenschaften, **dadurch gekennzeichnet, dass** seine Porosität im Wesentlichen Poren zwischen 0,001 und 1 µm umfasst und dass er eine Kristallinität hat, die definiert ist durch:
- eine Breite auf halber Höhe der Röntgenbeugungslinien entsprechend der Ebene [2 2 0] der SiCβ-Kristallite zwischen 0,15 und 0,60°, Winkel 20 des Bragg-Gesetzes,
- eine Höhe des zweidimensionalen Peaks [1 0] entsprechend den Richtungen [1 0], bezogen auf die integrierte Peakintensität der Ebene [2 2 0], zwischen 0,15 und 0,40.

2. Granulierter Katalysatorträger nach Anspruch 1, **dadurch gekennzeichnet, dass** seine spezifische Oberfläche größer als 10 m²/g ist.

3. Granulierter Katalysatorträger nach irgendeinem der Ansprüche 1 oder 2, **dadurch gekennzeichnet, dass** seine Druckfestigkeit größer als 1 MPa ist.

4. Granulierter Katalysatorträger nach irgendeinem der Ansprüche 1 bis 3, **dadurch gekennzeichnet, dass** seine lose Dichte zwischen 0,5 und 0,9 liegt.

5. Verfahren zur Herstellung des Katalysatorträgers aus Karbid in granulierter Form nach einem der Ansprüche 1 bis 4, **dadurch gekennzeichnet, dass** es folgende Verfahrensschritte aufweist:
- Mischen eines wärmehärtenden Harzes oder eines Pechs mit mindestens einem Si- und/oder SiO₂-Pulver und optional mit Zusätzen,
- Formen der erhaltenen Mischung,
- Härten des Harzes oder Pechs,
- Wärmebehandeln in leicht oxidierender Atmosphäre unter Luftdruck bei einer Temperatur zwischen 1300 und 1450°C, um das Harz oder Pech zu verkohlen und optional SiO₂ zu reduzieren und das Silizium aufzukohlen, wobei die Reaktionen immer in einer Feststoff- oder Gasphase ablaufen.

6. Verfahren nach Anspruch 5, **dadurch gekennzeichnet, dass** die Mischung mindestens einen der folgenden Zusätze enthält: aktivierter Kohlenstoff, Vernetzer, Porenbildner, Weichmacher, Schmiermittel, Lösungsmittel.

7. Verfahren nach irgendeinem der Ansprüche 5 oder 6, **dadurch gekennzeichnet, dass** es sich bei dem Si- und/oder SiO₂-Pulver um Kieselerderauch handelt.

8. Verfahren nach irgendeinem der Ansprüche 5 bis 7, **dadurch gekennzeichnet, dass** der CO-Partialdruck während der Wärmebehandlung 1 bis 500 mbar beträgt.

## Claims

1. Catalyst support in granular form with a SiC-β crystallite base and a specific surface area greater than 5 m²/g, having improved mechanical characteristics, **characterized in that** its porosity essentially comprises pores of between 0.001 and 1 µm and **in that** its crystallinity is determined by :
- a full width at half maximum of diffraction X rays, corresponding to plane [2 2 0] of the SiC-β crystallites, of between 0.15 and 0.60°, angle 2θ of Bragg's law
- a bidimensional peak height[1 0]corresponding to directions [1 0] related to the integrated intensity of the peak of plane [2 2 0] of between 0.15 and 0.40.

2. Granular support in accordance with claim 1, **characterized in that** its specific surface area is more than 10m2/g.

3. Granular support in accordance with either of claims 1 or 2, **characterized in that** its crushing strength is more than 1 MPa.

4. Granular support in accordance with any of claims 1 to 3, **characterized in that** its unpacked density lies between 0.5 and 0.9.

5. Method of obtaining the carbide catalytic support in granular form of any of claims 1 to 4, **characterized in that** it comprises the following stages :
- mixing a thermosetting resin or pitch with at least one Si and/or SiO₂ powder, and optionally with additives,
- giving shape to the mixture obtained
- setting the resin or pitch
- heat treatment in a slightly oxidising atmosphere at atmospheric pressure to a temperature of between 1300 and 1450°C to carbonize the resin or pitch, followed by optional reduction of SiO₂, and carburization of the silicon, the reactions being conducted at all times in solid or gaseous phase.

6. Method in accordance with claim 5, **characterized in that** the mixture comprises at least one of the following additives : activated charcoal, reticulant, porogenous agent, plastifying agent, lubricant, solvent.

7. Method in accordance with either of claims 5 or 6 **characterized in that** the Si and/or SiO₂ powder is silica fumes.

8. Method in accordance with any of claims 5 to 7, **characterized in that** the partial pressure of CO during heat treatment lies between 1 and 500 mbar.
